# EUROPEAN PATENT APPLICATION

(11) **EP 3 852 285 A1**
(43) Date of publication of application: **21.07.2021**
(21) Application number: 19859430.1
(22) Date of filing: 06.09.2019
(51) Int. Cl.: H04B 10/03, H04B 3/44, H04B 10/291, H04J 14/02

(54) **PATH SWITCHING APPARATUS AND PATH SWITCHING METHOD**

(30) Priority: 10.09.2018 JP 2018168969
(71) Applicant: NEC Corporation, 108-8001 Tokyo (JP)
(72) Inventor: TAKAHASHI Masaki, Tokyo 108-8001 (JP)
(74) Representative: Reeve, Nicholas Edward
(86) International application number: PCT/JP2019/035191
(87) International publication number: WO 2020/054614

(57) **Abstract**

In order to provide a path switching apparatus capable of continuing communication by operation corresponding to the state of occurrence of a failure, this path switching apparatus is configured to be provided with a first switching device 1, a second switching device 2, a detection circuit 3, and a control circuit 4. The first switching device 1 switches, using a first switch, connection between a first submarine cable and either a predetermined optical path or a third submarine cable connected to an optical branching/insertion device. The second switching device 2 switches, using a second switch, connection between a second submarine cable and either the predetermined optical path connected to the first switch or the third submarine cable connected to the optical branching/insertion device. The detection circuit 3 detects the state of an optical signal inputted via the third submarine cable. The control circuit 4 controls switching of the switches on the basis of electric power supplied through the first submarine cable or the second submarine cable. The control circuit 4 controls the switches on the basis of the state of detection of an optical signal.

## Description

### [Technical Field]

The present invention relates to an optical submarine cable system, and more particularly to a submarine device.

### [Background Art]

In many cases, an optical submarine cable system employs, as a device that splits a part of a wavelength-multiplexed optical signal to a branch station side, a configuration of connecting a branch unit and a reconfigurable optical add/drop multiplexer (ROADM) unit to each other. The branch unit and the ROADM unit cannot be integrally configured due to size limitation of a casing body of a submarine device, and hence a configuration in which the ROADM unit connected via a submarine cable is arranged in the vicinity of the branch unit is employed in some cases.

The submarine device such as the branch unit and the ROADM unit operates based on electric power supplied from a terminal station on land via a power supply line of the submarine cable. Thus, in order to perform continuous communication in the optical submarine cable system, it is required to supply electric power stably to each submarine device. However, the submarine cable laid on the seabed is damaged in some cases, and there is a risk that supply of electric power via the damaged submarine cable is stopped. It is desired that, even when damage or the like of the submarine cable is caused, an operation of each submarine device is continued according to an occurrence state of a failure. Thus, a technique of continuing an operation of a submarine device when damage or the like of a submarine cable is caused has been developed. As such a technique of continuing an operation of a submarine device according to an occurrence state of a failure when damage or the like of a submarine cable is caused, for example, a technique as in PTL 1 is disclosed.

PTL 1 relates to a power supply system that supplies electric power from a branch station side and a trunk station side to a submarine device. When a failure occurs in a power supply function on the trunk station side, the power supply system in PTL 1 performs power supply from the branch station side, and operates a submarine device in which a failure does not occur, thereby continuing communication.

### [Citation List]

### [Patent Literature]

[PTL 1] International Publication No. WO 2016/181642

### [Summary of Invention]

### [Technical Problem]

However, the technique in PTL 1 is not sufficient in view of the following point. In a configuration of using a submarine cable for connection between the branch unit and the ROADM unit at a part of connecting the trunk side and the branch side to each other, a failure may possibly occur in the submarine cable between the branch unit and the ROADM unit. In this case, there is a risk that communication between the trunk station and the branch station cannot be performed due to initialization or the like of a switching element although the ROADM unit and the like are operable. Thus, the technique in PTL 1 is not sufficient as a technique of continuing communication by appropriately operating a submarine device according to an occurrence state of a failure when damage or the like of a submarine cable is caused.

In order to solve the above-mentioned problem, an object of the present invention is to provide a path switching apparatus capable of continuing communication with an operation according to an occurrence state of a failure when the failure occurs in a submarine cable.

### [Solution to Problem]

In order to solve the above-mentioned problem, a path switching apparatus according to the present invention includes a first switching means, a second switching means, a detection means, and a control means. The first switching means switches, by using a first switch, connection between an optical fiber of a first submarine cable and any one of a predetermined optical path and an optical fiber of a third submarine cable being connected to an optical branching/insertion device. The second switching means switches, by using a second switch, connection between an optical fiber of a second submarine cable and any one of the predetermined optical path being connected to the first switch and an optical fiber of the third submarine cable being connected to the optical branching/insertion device. The detection means detects a state of an optical signal that is input from the optical branching/insertion device to the second switch via the optical fiber of the third submarine cable. The control means operates by electric power being supplied via a power supply line of the first submarine cable or the second submarine cable, and controls switching of the first switch and the second switch. Further, the control means controls the first switch and the second switch, based on the state of the optical signal that is detected by the detection means 3.

A path switching method according to the present invention includes connecting an optical fiber of a first submarine cable and a first switch being configured to switch connection with any one of a predetermined optical path and an optical fiber of a third submarine cable being connected to an optical branching/insertion device. The path switching method according to the present invention further includes connecting an optical fiber of a second submarine cable and a second switch being configured to switch connection with any one of the predetermined optical path being connected to the first switch and the optical fiber of the third submarine cable being connected to the optical branching/insertion device. The path switching method according to the present invention further includes detecting a state of an optical signal that is input from the optical branching/insertion device to the second switch via the optical fiber of the third submarine cable. The path switching method according to the present invention further includes performing switching of the first switch and the second switch by power supplied via a power supply line of the first submarine cable or the second submarine cable, based on the detection state of the optical signal.

### [Advantageous Effects of Invention]

The present invention is able to continue communication with an operation according to an occurrence state of a failure.

### [Brief Description of Drawings]

Fig. 1 is a view illustrating an overview of a configuration of a first example embodiment of the present invention.
Fig. 2 is a view illustrating an overview of a configuration of a second example embodiment of the present invention.
Fig. 3 is a view illustrating a configuration of a branch unit of the second example embodiment of the present invention.
Fig. 4 is a view schematically illustrating an example of a state of a switch of the branch unit.
Fig. 5 is a view schematically illustrating an example of a state of the switch of the branch unit.
Fig. 6 is a view illustrating a configuration example of a branch unit having a configuration compared with the present invention.
Fig. 7 is a view illustrating a configuration example of a branch unit having a configuration compared with the present invention.

### [Example Embodiment]

### (First Example Embodiment)

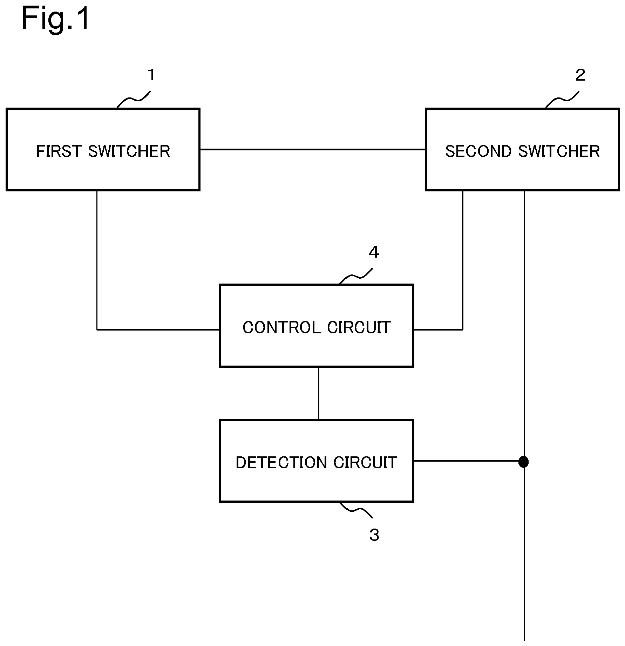

With reference to the drawing, a first example embodiment of the present invention is described in detail. Fig. 1 illustrates an overview of a configuration of a path switching apparatus according to the present example embodiment. The path switching apparatus according to the present example embodiment includes a first switcher 1, a second switcher 2, a detection circuit 3, and a control circuit 4. The first switcher 1 is one example of a first switching means. The second switcher 2 is one example of a second switching means. The detection circuit 3 is one example of a detection means. The control circuit 4 is one example of a control means. The first switcher 1 uses a first switch, and thus switches connection between an optical fiber of a first submarine cable and any one of a predetermined optical path and an optical fiber of a third submarine cable connected to an optical branching/insertion device. The second switcher 2 uses a second switch, and thus switches connection between an optical fiber of a second submarine cable and any one of the predetermined optical path connected to the first switch and the optical fiber of the third submarine cable connected to the optical branching/insertion device. The detection circuit 3 detects a state of an optical signal that is input from the optical branching/insertion device to the second switch via the optical fiber of the third submarine cable. The control circuit 4 is operated by electric power that is supplied via a power supply line of the first submarine cable or the second submarine cable, and controls switching of the first switch and the second switch. Further, the control circuit 4 controls the first switch and the second switch, based on the state of the optical signal detected by the detection circuit 3.

In the path switching apparatus according to the present example embodiment, the state of the optical signal that is input from the optical branching/insertion device to the second switch is detected, and the control circuit 4 controls the first switch and the second switch. Further, the control circuit 4 is operated by electric power that is supplied via the power supply line of the first submarine cable or the second submarine cable, and controls the switches. Thus, the path switching apparatus according to the present example embodiment can be operated even in a state without supply of electric power from an optical branching/insertion device side, and can perform switching of the switches according to the state of the optical signal. As a result, when the path switching apparatus according to the present example embodiment is used, communication can be continued with an operation according to an occurrence state of a failure.

### (Second Example Embodiment)

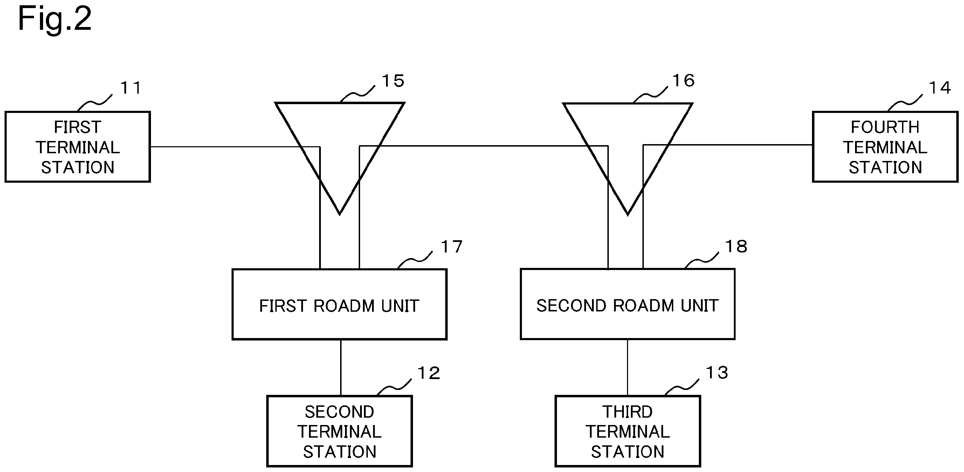

With reference to the drawings, a second example embodiment of the present invention is described in detail. Fig. 2 illustrates an overview of a configuration of an optical submarine cable system according to the present example embodiment. The optical submarine cable system according to the present example embodiment is configured as an optical communication network for transmitting a wavelength-multiplexed optical signal. The optical submarine cable system according to the present example embodiment includes a branch unit and a reconfigurable optical add/drop multiplexer (ROADM) unit, has a branch structure, and is configured as a network for performing communication among a plurality of terminal stations.

The optical submarine cable system according to the present example embodiment includes a first terminal station 11, a second terminal station 12, a third terminal station 13, a fourth terminal station 14, a first branch unit 15, a second branch unit 16, a first ROADM unit 17, and a second ROADM unit 18.

In the optical submarine cable system according to the present example embodiment, submarine cables between the first terminal station 11 and the fourth terminal station 14 form a trunk line. Further, the second terminal station 12 and the third terminal station 13 are connected to branch lines split from the trunk line. Specifically, in the optical submarine cable system according to the present example embodiment, the first terminal station 11 and the fourth terminal station 14 have functions as trunk stations, and the second terminal station 12 and the third terminal station 13 have functions as branch stations.

Each of the terminal stations is installed on land. Further, each of the branch units and each of the ROADM units are installed as submarine devices. The terminal station and the branch unit, the branch unit and the ROADM unit, and the ROADM unit and the terminal station are each connected to each other via a submarine cable. The submarine cable is constituted of an optical fiber and a power supply line. The optical fiber has a plurality of cores, and transmits an optical signal bidirectionally.

The first terminal station 11, the second terminal station 12, the third terminal station 13, and the fourth terminal station 14 each include an optical terminal station device, a power supply device, and a monitoring device. The optical terminal station device performs transmission and reception of a wavelength-multiplexed signal with the other terminal stations via the submarine cable. The power supply device supplies power to each submarine device via the power supply line of the submarine cable. The monitoring device monitors a communication state of an optical signal in a transmission path.

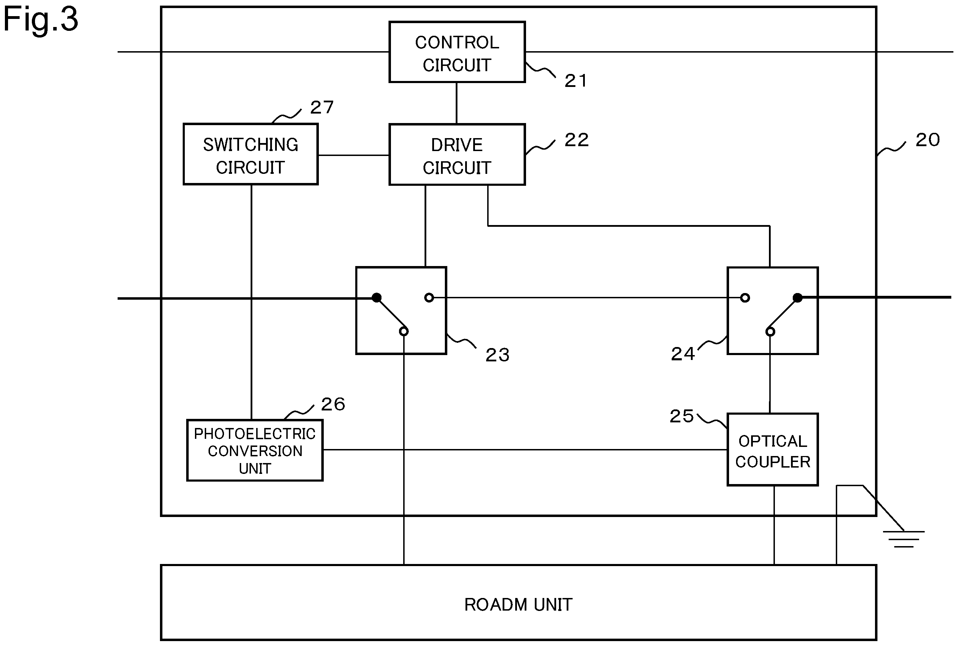

Configurations of the first branch unit 15 and the second branch unit 16 are described. Fig. 3 illustrates a configuration of a branch unit 20 that is used as the first branch unit 15 and the second branch unit 16.

The branch unit 20 includes a control circuit 21, a drive circuit 22, a first optical switch 23, a second optical switch 24, an optical coupler 25, a photoelectric conversion unit 26, and a switching circuit 27.

The control circuit 21 controls the drive circuit 22, and thus perform switching of optical switches. The control circuit 21 is operated by power supplied via the power supply line of the trunk line.

The drive circuit 22 performs switching of the first optical switch 23 and the second optical switch 24. The control circuit 21 and the drive circuit 22 are each constituted by using a semiconductor device such as a field programmable gate array (FPGA). The control circuit 21 and the drive circuit 22 may each have a configuration of executing each processing by executing a computer program on a central processing unit (CPU).

The first optical switch 23 and the second optical switch 24 switch paths of an optical signal. The first optical switch 23 connects a path, which is connected to an optical fiber of the trunk station side, to any one path on the second optical switch 24 side or the branch station side. Further, the second optical switch 24 connects a path, which is connected to an optical fiber of the trunk station side, to any one path on the first optical switch 23 side or the branch station side. For example, as the optical switch, a switch using micro electro mechanical systems (MEMS) is used. Further, the functions of the first optical switch 23 and the second optical switch 24 of the present example embodiment are relevant to the first switching means 1 and the second switching means 2 of the first example embodiment, respectively.

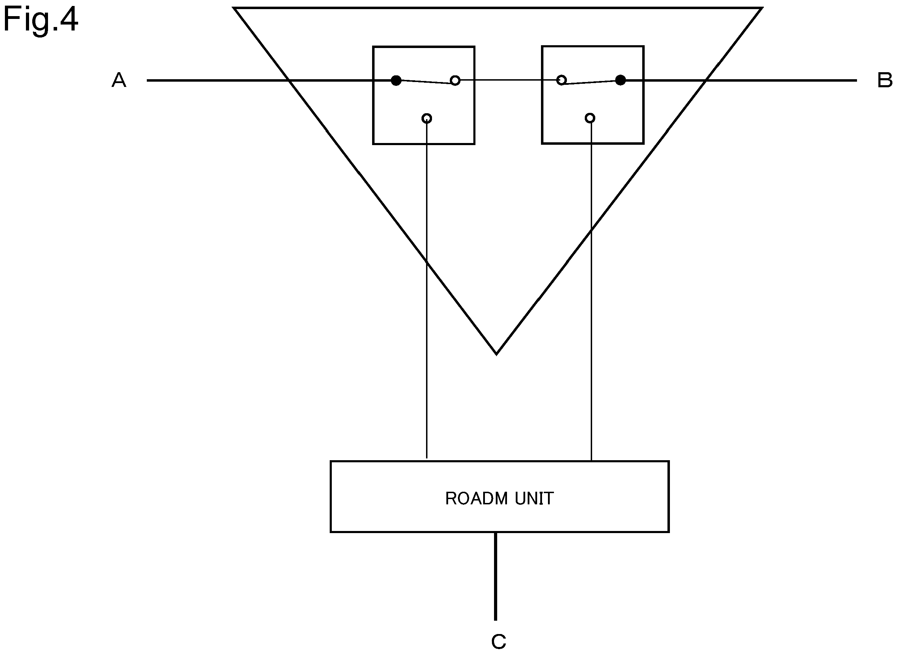

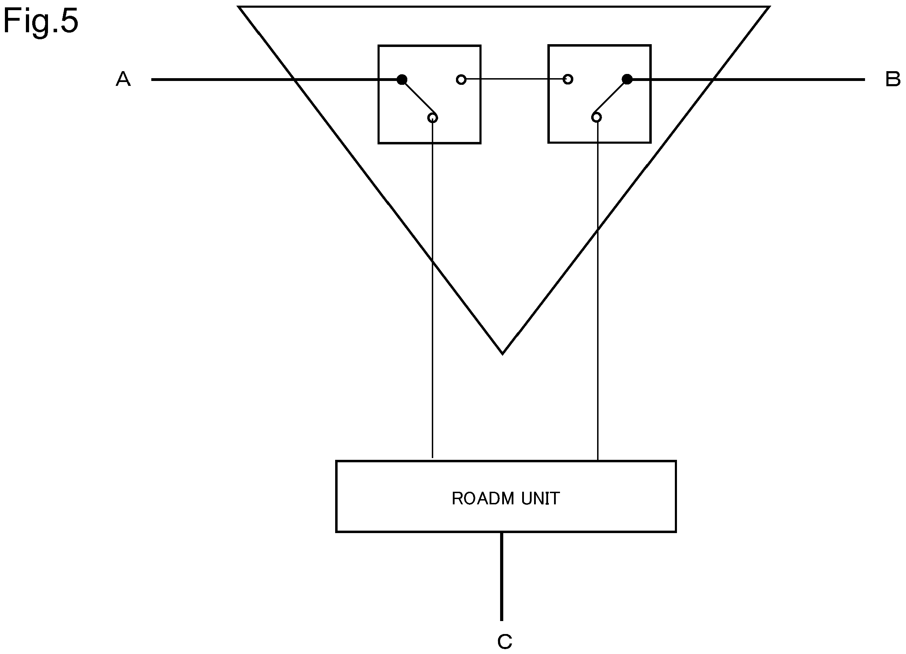

Figs. 4 and 5 are views schematically illustrating a state of the optical switches and a connected path. In Fig. 4, A and B of the trunk line are connected to each other by the optical switches. Thus, a wavelength-multiplexed signal that is input from one of an A side and a B side is output to another one of the A side and the B side without passing through the ROADM unit. Thus, terminal stations connected to the A side and the B side cannot perform communication with a terminal station connected to a C side. Further, the terminal station connected to the C side cannot perform communication with the other terminal stations.

In Fig. 5, the A side and the B side of the trunk line are connected to the C side of the branch line by the optical switches. Thus, wavelength-multiplexed signals that are input from the A side, the B side, and the C side are input to the ROADM unit, and are distributed to the paths according to wavelength setting.

The optical coupler 25 splits an optical signal that is input from the trunk station side. The optical coupler 25 outputs the split optical signal to the second optical switch 24 and the photoelectric conversion unit 26. A branching ratio at the optical coupler 25 is set in such a way that optical power of the optical signal that is output to the second optical switch 24 side has sufficient intensity for maintaining transmission quality of the optical signal.

The photoelectric conversion unit 26 converts the optical signal, which is input from the optical coupler 25, into an electric signal. The photoelectric conversion unit 26 is constituted by using a photodiode. The photoelectric conversion unit 26 outputs the electric signal, which is converted from the optical signal, to the switching circuit 27. Further, the functions of the optical coupler 25 and the photoelectric conversion unit 26 of the present example embodiment are relevant to the detection means 3 of the first example embodiment.

When an electric signal is not input, the switching circuit 27 outputs a signal for switching to the first optical switch 23 and the second optical switch 24. When the signal for switching is input, the first optical switch 23 connects the path on the trunk station side and the path on the second optical switch 24 side to each other. Further, when the signal for switching is input, the second optical switch 24 connects the path on the trunk station side and the path on the first optical switch 23 side to each other. Further, the functions of the control circuit 21, the drive circuit 22, and the switching circuit 27 of the present example embodiment are relevant to the control means 4 of the first example embodiment.

An operation of the optical submarine cable system according to the present example embodiment is described. First, an operation at normal time is described.

At the normal time, the first optical switch 23 of the first branch unit 15 connects a path on a first terminal station 11 side and a path on a first ROADM unit 17 side to each other. Further, the second optical switch 24 of the first branch unit 15 connects a path on a second branch unit 16 side and a path on the first ROADM unit 17 side to each other.

At the normal time, the first optical switch 23 of the second branch unit 16 connects a path on a first branch unit 15 side and a path on a second ROADM unit 18 side to each other. Further, the second optical switch 24 of the second branch unit 16 connects a path on a fourth terminal station 14 side and a path on the second ROADM unit 18 side to each other.

Description is made on an example in which a wavelength-multiplexed signal that is output from the first terminal station 11 is transmitted to the fourth terminal station 14. The wavelength-multiplexed signal that is output from the first terminal station 11 is transmitted to the first ROADM unit 17 via the first branch unit 15. When the wavelength-multiplexed signal is input, the first ROADM unit 17 divides an optical signal in a wavelength group, which is to be transmitted to the second terminal station 12, from the wavelength-multiplexed signal, and outputs the optical signal to an optical fiber on a second terminal station 12 side. Further, the first ROADM unit 17 multiplexes the wavelength-multiplexed signal and an optical signal, which is to be transmitted to the third terminal station 13 and the fourth terminal station 14, of the optical signals that are transmitted from the second terminal station 12. When the optical signal that is transmitted from the second terminal station 12 is multiplexed with the wavelength-multiplexed signal, the first ROADM unit 17 transmits the wavelength-multiplexed signal to the first branch unit 15.

When the wavelength-multiplexed signal is input from the first ROADM unit 17, the first branch unit 15 transmits the wavelength-multiplexed signal to the second branch unit 16.

The wavelength-multiplexed signal that is input to the second branch unit 16 is transmitted to the second ROADM unit 18.

When the wavelength-multiplexed signal is input, the second ROADM unit 18 divides an optical signal in a wavelength group, which is to be transmitted to the third terminal station 13, from the wavelength-multiplexed signal, and outputs the optical signal to the optical fiber on a third terminal station 13 side. Further, the second ROADM unit 18 multiplexes the wavelength-multiplexed signal and an optical signal, which is to be transmitted to the fourth terminal station 14, of the optical signals that are transmitted from the third terminal station 13. When the optical signal that is transmitted from the third terminal station 13 is multiplexed with the wavelength-multiplexed signal, the second ROADM unit 18 transmits the wavelength-multiplexed signal to the second branch unit 16.

The wavelength-multiplexed signal that is input to the second branch unit 16 is transmitted to the fourth terminal station 14. Further, when a wavelength-multiplexed signal is transmitted from the fourth terminal station 14 to the first terminal station 11, the wavelength-multiplexed signal is transmitted similarly in a path reverse to the above-described path.

Next, description is made on an operation when abnormality is caused in the submarine cable between the branch unit and the ROADM unit. A case where abnormality is caused in the submarine cable that connects the first branch unit 15 and the first ROADM unit 17 to each other is described as an example. First, description is made on a case where abnormality is caused only in the power supply line.

When abnormality is caused in the power supply line of the first branch unit 15, the first ROADM unit 17 cannot be supplied with power from the trunk line. The first ROADM unit 17 can be operated by power supplied from the second terminal station 12 of the branch line. Further, in this case, a wavelength-multiplexed signal that is split at the optical coupler 25 is input to the photoelectric conversion unit 26. Thus, switching of switching elements of the first branch unit 15 is not performed. Thus, transmission and reception of a wavelength-multiplexed signal between the terminal stations is continued similarly to the case at the normal time.

Next, description is made by taking, as an example, a case where abnormality is caused in the optical fiber. When abnormality is caused in the optical fiber, a wavelength-multiplexed signal that is output from the first ROADM unit 17 is not input to the first branch unit 15. Thus, an optical signal is not transmitted from the optical coupler 25 to the photoelectric conversion unit 26. When an electric signal that is input from the photoelectric conversion unit 26 is equal to or less than a reference, the switching circuit 27 outputs a signal for requesting switching of the switches to the drive circuit 22. When the signal for requesting switching of the switches is received, the drive circuit 22 performs switching of the first optical switch 23 and the second optical switch 24. The drive circuit 22 controls the first optical switch 23, and connects the path on the first terminal station 11 side and the path on the second optical switch 24 side to each other. In this case, the path on the first terminal station 11 side and the path on the first ROADM unit 17 side are in a disconnected state. Further, the drive circuit 22 controls the second optical switch 24, and connects the path on the fourth terminal station 14 side and the path on the first optical switch 23 side to each other. In this case, the path on the fourth terminal station 14 side and the path on the first ROADM unit 17 side are in a disconnected state.

When switching is performed in the first optical switch 23 and the second optical switch 24, transmission and reception of a signal among the first terminal station 11, the third terminal station 13, and the fourth terminal station 14 are enabled.

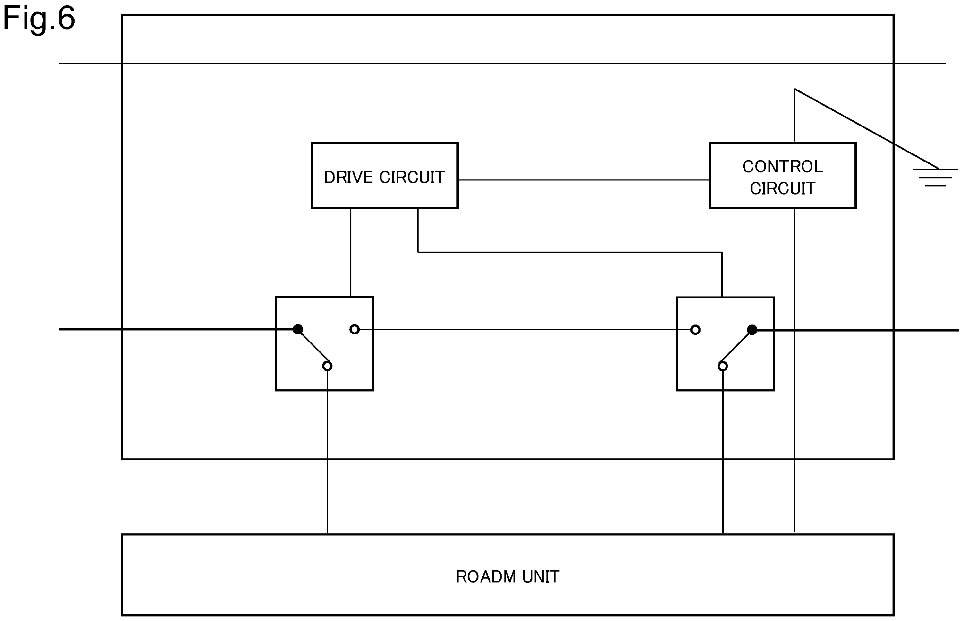

Fig. 6 illustrates a configuration example of the branch unit in a case where the control circuit receives supply of electric power from the branch line side. In the configuration as in Fig. 6, when abnormality is caused in the power supply line on the branch side, and electric power is not supplied, it is designed that the trunk lines are connected to each other. In the configuration as in Fig. 6, a state of connecting the trunk lines to each other is set as an initial setting, and the switch is initialized when electric power is not supplied. At the time of initialization, the branch unit and the ROADM unit cannot perform communication, and hence the branch station cannot perform communication with the other terminal stations.

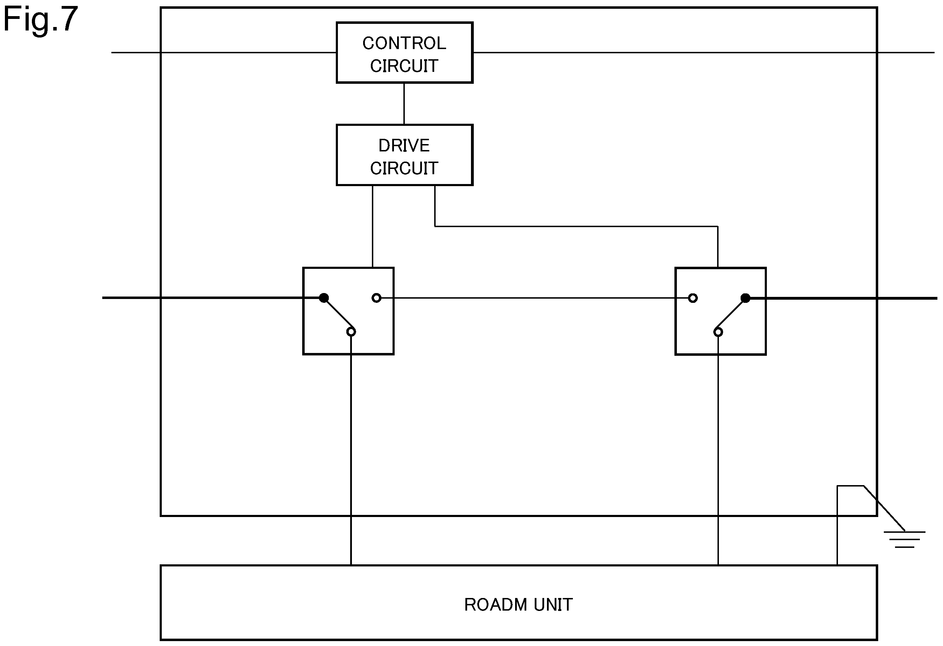

Fig. 7 illustrates a configuration example of the branch unit in a case where the control circuit receives supply of electric power from the trunk side. In the configuration as in Fig. 7, even when a failure occurs in the power supply line on the branch side, the control circuit, which is operated by electric power supplied from the trunk side, is operated normally, and hence the switch is maintained in a state of connecting the trunk side and the branch side to each other. In this case, when the optical fiber is normal, the terminal station on the trunk side and the terminal station on the branch side can continue communication. Meanwhile, when a failure occurs in the optical fiber, in a state in which the failure cannot be detected and an optical signal is not transmitted, the terminal station on the trunk side and the terminal station on the branch side are connected to each other, and hence a communication failure occurs.

Meanwhile, in a case where power supply from a ground of the branch unit to a failure point is not performed, when communication of an optical signal can be performed normally, the optical submarine cable system according to the present example embodiment maintains a state of the optical switches for switching the paths from the branch unit to the ROADM unit. The control circuit of the branch unit of the present example embodiment receives supply of electric power from the trunk side, and hence, even when a failure occurs on the branch side, the state of the switches can be maintained. Further, an optical signal that is input from the branch side is monitored, and switching control of disconnecting the branch side is performed only when the optical signal cannot be detected. Thus, in the present example embodiment, a state in which communication is to be performed with the branch side in spite of a failure can be avoided, and communication on the trunk side can be continued normally.

The branch unit of the optical submarine cable system according to the present example embodiment performs control of the switching elements by electric power that is supplied via the power supply line on the trunk side. Thus, even when abnormality is caused in the power supply line on the branch side, the state of the switching elements can be maintained. Thus, when abnormality is caused only in the power supply line, and an optical signal can be transmitted normally through the optical fiber, normal communication can be continued. Further, when the optical coupler monitors an optical signal that is input from the branch side, and the optical signal cannot be detected, switching of the switches is performed, and the trunk sides are connected to each other. Thus, even when abnormality is caused on the branch side, the optical submarine cable system according to the present example embodiment can continue communication on the trunk side. As a result, the optical submarine cable system according to the present example embodiment can continue communication with an operation according to an occurrence state of a failure.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2018-168969, filed on September 10, 2018, the disclosure of which is incorporated herein in its entirety by reference.

### [Reference signs List]

- 1: First switcher
- 2: Second switcher
- 3: Detection circuit
- 4: Control circuit
- 11: First terminal station
- 12: Second terminal station
- 13: Third terminal station
- 14: Fourth terminal station
- 15: First branch unit
- 16: Second branch unit
- 17: First ROADM unit
- 18: Second ROADM unit
- 20: Branch unit
- 21: Control circuit
- 22: Drive circuit
- 23: First optical switch
- 24: Second optical switch
- 25: Optical coupler
- 26: Photoelectric conversion unit
- 27: Switching circuit

## Claims

1. A path switching apparatus, comprising:
first switching means for switching, by using a first switch, connection between an optical fiber of a first submarine cable and any one of a predetermined optical path and an optical fiber of a third submarine cable being connected to an optical branching/insertion device;
second switching means for switching, by using a second switch, connection between an optical fiber of a second submarine cable and any one of the predetermined optical path being connected to the first switch and an optical fiber of the third submarine cable being connected to the optical branching/insertion device;
detection means for detecting a state of an optical signal that is input from the optical branching/insertion device to the second switch via an optical fiber of the third submarine cable; and
control means for operating by electric power being supplied via a power supply line of the first submarine cable or the second submarine cable, and controlling switching of the first switch and the second switch, wherein
the control means controls the first switch and the second switch, based on a state of the optical signal that is detected by the detection means.

2. The path switching apparatus according to claim 1, wherein,
when the detection means detects the optical signal, the control means performs control in such a way that the first switch connects an optical fiber of the first submarine cable and an optical fiber of the third submarine cable to each other and that the second switch connects an optical fiber of the second submarine cable and an optical fiber of the third submarine cable to each other, and
when the detection means does not detect the optical signal, the control means controls the first switch and the second switch in such a way that an optical fiber of the first submarine cable and an optical fiber of the second submarine cable are connected to each other via the predetermined optical path.

3. The path switching apparatus according to claim 1 or 2, further comprising:
branching means for splitting a wavelength-multiplexed signal that is input via an optical fiber of the third submarine cable; and
photoelectric conversion means for converting a wavelength-multiplexed signal being split by the branching means, into an electric signal, wherein
the detection means detects a state of the optical signal, based on the electric signal that is output from the photoelectric conversion means.

4. A submarine branching apparatus, comprising:
the path switching apparatus according to any one of claims 1 to 3; and
an optical branching/insertion device being connected to the path switching apparatus via the third submarine cable.

5. The submarine branching apparatus according to claim 4, wherein
the path switching apparatus is connected to a trunk line via the first submarine cable and the second submarine cable, and is connected to a branch line via the third submarine cable.

6. An optical submarine cable system, comprising:
the submarine branching apparatus according to claim 4 or 5;
a first terminal station configured to perform transmission and reception of a wavelength-multiplexed signal and supply of electric power via the first submarine cable; and
a second terminal station configured to perform transmission and reception of a wavelength-multiplexed signal and supply of electric power via the third submarine cable.

7. The optical submarine cable system according to claim 6, wherein
the submarine branching apparatus splits a signal in a first wavelength group from a wavelength-multiplexed signal that is transmitted from the first terminal station and transmits the signal to the second terminal station, and inserts a signal in a second wavelength group that is input from the second terminal station, into the wavelength-multiplexed signal, and outputs the signal.

8. A path switching method, comprising:
connecting an optical fiber of a first submarine cable and a first switch to each other, the first switch being configured to switch connection with any one of a predetermined optical path and an optical fiber of a third submarine cable being connected to an optical branching/insertion device;
connecting an optical fiber of a second submarine cable and a second switch to each other, the second switch being configured to switch connection with any one of the predetermined optical path being connected to the first switch and an optical fiber of the third submarine cable being connected to the optical branching/insertion device;
detecting a state of an optical signal that is input from the optical branching/insertion device to the second switch via an optical fiber of the third submarine cable; and
switching the first switch and the second switch by power being supplied via a power supply line of the first submarine cable or the second submarine cable, based on a detection state of the optical signal.

9. The path switching method according to claim 8, wherein,
when the optical signal is detected, the first switch connects an optical fiber of the first submarine cable and an optical fiber of the third submarine cable to each other, and the second switch connects an optical fiber of the second submarine cable and an optical fiber of the third submarine cable to each other, and
when the optical signal is not detected, switching is performed in the first switch and the second switch in such a way that an optical fiber of the first submarine cable and an optical fiber of the second submarine cable are connected to each other via the predetermined optical path.

10. The path switching method according to claim 8 or 9, further comprising;
splitting a wavelength-multiplexed signal that is input via an optical fiber of the third submarine cable;
converting, into an electric signal, the wavelength-multiplexed signal that is split; and
detecting a state of the optical signal, based on the converted electric signal.
